# EUROPÄISCHE PATENTANMELDUNG

(11) **EP 1 334 858 A1**
(43) Veröffentlichungstag der Anmeldung: **13.08.2003**
(21) Anmeldenummer: 03002391.5
(22) Anmeldetag: 04.02.2003
(51) Int. Cl.: B60J 7/043

(54) **Öffnungsfähiges Fahrzeugdach**

(30) Priorität: 11.02.2002 DE 10205612
(71) Anmelder: Webasto Vehicle Systems International GmbH, 82131 Stockdorf (DE)
(72) Erfinder: Seifert, Wolfgang, 82407 Wielenbach (DE); De Gaillard, Francois, 85390 Mouilleron en Pareds (FR); Wingen, Bernhard, 83620 Feldkirchen-Westerham (DE)
(74) Vertreter: Bedenbecker, Markus

(57) **Zusammenfassung**

Die Erfindung betrifft ein öffnungsfähiges Fahrzeugdach, das mit mindestens einem in der Schließstellung mindestens einen Teil einer Dachöffnung (46) verschließenden Deckel (10, 110), einem mittels eines Antriebs in einer ersten dachfesten Führung (38) in Dachlängsrichtung verschiebbaren Schlitten (36, 136) sowie einem deckelfesten Deckelträger (12, 112) versehen ist, der mittels eines ersten Gleitelements (16, 116) in einer zweiten dachfesten Führung (20) und mittels eines gegenüber dem ersten Gleitelement nach hinten versetzten zweiten Gleitelement (18, 118) in einer dritten dachfesten Führung (22) in Dachlängsrichtung verschiebbar geführt ist, wobei der Deckel durch Verschieben des Schlittens nach hinten mit seiner Hinterkante ausgestellt und mit ausgestellter Deckelhinterkante nach hinten verschoben werden kann, um die Dachöffnung freizugeben. Der Deckelträger (12, 112) ist mit einer ersten Kulissenbahn (30, 130) versehen, in welche der Schlitten (36, 136) mittels eines ersten Eingriffselements (32, 132) eingreift und die so ausgebildet ist, dass, ausgehend von der Schließstellung, eine Verschiebung des Schlittens und damit des ersten Eingriffselements nach hinten eine Ausstellbewegung der Deckelhinterkante bewirkt.

## Beschreibung

Die vorliegende Erfindung betrifft ein öffnungsfähiges Fahrzeugdach gemäß dem Oberbegriff von Anspruch 1.

Ein solches gattungsgemäßes Fahrzeugdach ist beispielsweise aus DE 33 45 122 C2 bekannt, wobei es sich um ein Spoilerdach handelt, d.h. die erste und die zweite Führungsbahn sind so ausgebildet, dass der Deckel ausgehend von der Schließstellung mit seiner Hinterkante ausgestellt und in dieser Stellung nach hinten verschoben werden kann, um die Dachöffnung freizugeben. Die erste und die zweite Führungsbahn sind als Kulissenschlitze in einer dachfesten Kulisse ausgebildet und in Dachlängsrichtung hintereinander angeordnet, wobei jeweils ein deckelfester Kulissenstift in die Kulissenschlitze eingreift. Im Bereich des vorderen Kulissenstifts ist ein von einem Antriebskabel angetriebener Gleitschuh vorgesehen, welcher in eine dachfeste Führungsschiene eingreift, die gegenüberliegend zu der dachfesten Kulisse angeordnet ist. Nachteilig bei dieser Konstruktion ist, dass eine Ausstellbewegung des Deckels nur in Verbindung mit einer Verschiebung des Deckels erzielt werden kann, so dass dann, wenn die Kulissenbahnen so gestaltet sind, dass ein langsames Ausstellen des Deckels erfolgt, die Deckelvorderkante lange vor Erreichen der ausgestellten Lage von der vorderen Dichtung getrennt wird oder andererseits, wenn diese Verbindung bis zum Erreichen der ausgestellten Lage erhalten bleiben soll, dann die Ausstellbewegung nur sehr rasch, d.h. durch sehr steile Kulissenbahnen erzielt werden kann.

Es ist Aufgabe der vorliegenden Erfindung, ein öffnungsfähiges Fahrzeugdach zu schaffen, bei welchem es möglich ist, eine Verbindung der Deckelvorderkante mit der vorderen Dichtung während des Ausstellens des Deckels zu erhalten und zugleich eine langsame Ausstellbewegung des Deckels zu erzielen.

Diese Aufgabe wird in erfindungsgemäßer Weise durch ein Fahrzeugdach gelöst, wie es in Anspruch 1 definiert ist.

Bei dieser erfindungsgemäßen Lösung ist vorteilhaft, dass durch das Vorsehen einer Kulissenbahn in dem Deckelträger, in welche der angetriebene Schlitten eingreift, eine Entkopplung der Verschiebebewegung und Ausstellbewegung des Deckels zu Beginn der Öffnungsbewegung ermöglicht wird. Dadurch kann beispielsweise ohne wesentliche Verschiebebewegung des Deckels eine im wesentlichen beliebig langsame Ausstellbewegung durch entsprechende Gestaltung der Kulissenbahn des Deckelträgers erzielt werden, so dass es möglich ist, während der Ausstellbewegung der Deckelhinterkante die Deckelvorderkante im wesentlichen ortsfest zu halten.

Bevorzugte Ausgestaltungen der Erfindung ergeben sich aus den Unteransprüchen.

Im folgenden wird die Erfindung beispielhaft anhand der beigefügten Zeichnungen näher erläutert, wobei:
FIG. 1 eine Seitenansicht des vorderen Deckels eines erfindungsgemäßen Fahrzeugdachs in Schließstellung zeigt;
FIG. 2 eine Ansicht wie Fig. 1 zeigt, wobei der Deckel jedoch bereits teilweise ausgestellt ist;
Fig. 3 eine Ansicht wie Fig. 1 zeigt; wobei jedoch der Deckel nahezu vollständig ausgestellt ist;
Fig. 4 eine Ansicht wie Fig. 1 zeigt, wobei jedoch der Deckel vollständig ausgestellt ist;
Fig. 5 eine Seitenansicht des hinteren Deckels eines erfindungsgemäßen Fahrzeugdachs in Schließstellung zeigt;
Fig. 6 eine Ansicht wie Fig. 4 zeigt, wobei jedoch der vordere Deckel vollständig ausgestellt und der hintere Deckel nahezu vollständig ausgestellt ist;
Fig. 7 eine Ansicht wie Fig. 5 zeigt, wobei jedoch der vordere und der hintere Deckel vollständig ausgestellt und zurückgeschoben sind;
Fig. 8 eine Schnittansicht der Führungsschiene entlang der Linie VIII-VIII in Fig. 3 zeigt; und
Fig. 9 eine Schnittansicht der Führungsschiene entlang der Linie IX-IX in Fig. 5 zeigt.

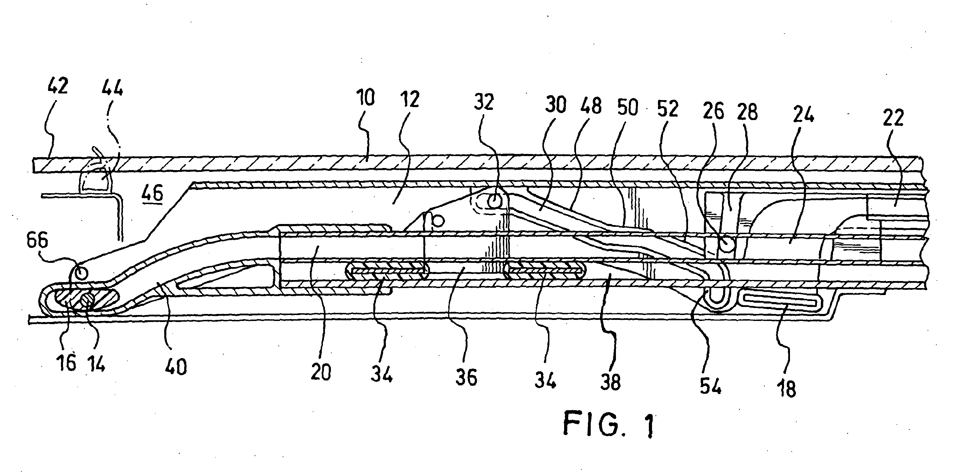

In Fig. 1 ist der vordere Deckel 10 eines sogenannten Doppelspoilerdaches in Schließstellung dargestellt. An dem Deckel 10 ist ein Deckelträger 12 befestigt, der an seinem vorderen Ende einen um eine Achse 14 schwenkbaren Gleitschuh 16 und in seinem mittleren Abschnitt einen hinteren Gleitschuh 18 trägt, der bezüglich des Deckelträgers 12 feststehend ist. Der vordere Gleitschuh 16 ist in einem Führungskanal 20 in Hochrichtung geführt, während der hintere Gleitschuh 18 für die Führung in einem Führungskanal 22 vorgesehen ist, wobei er in der in Fig. 1 gezeigten Schließstellung jedoch noch unterhalb des Anfangsbereichs 24 des Führungskanals 22 liegt. Ferner ist an dem Deckelträger 12 ein Bolzen 26 ausgebildet, der in der in Fig. 1 gezeigten Schließstellung in eine nahezu senkrecht, d.h. sehr steil verlaufende dachfeste Kulissenbahn 28 eingreift, die am oberen und unteren Ende offen ist. Im mittleren Bereich ist der Deckelträger 12 mit einer Kulissenbahn 30 versehen, in welche ein Kulissenstift 32 eingreift, der an einem von einem (nicht dargestellten) Antriebskabel angetriebenen und mittels zweier Gleitschuhe 34 in einem Führungskanal 38 in Dachlängsrichtung verschiebbar geführten Schlitten 36 ausgebildet ist. Bei der in Fig. 1 gezeigten Schließstellung liegt der Kulissenstift 32 in dem im wesentlichen horizontal verlaufenden vorderen Endbereich der Kulissenbahn 30, der zum Ausgleichen von Herstellungs- und Montagetoleranzen dient.

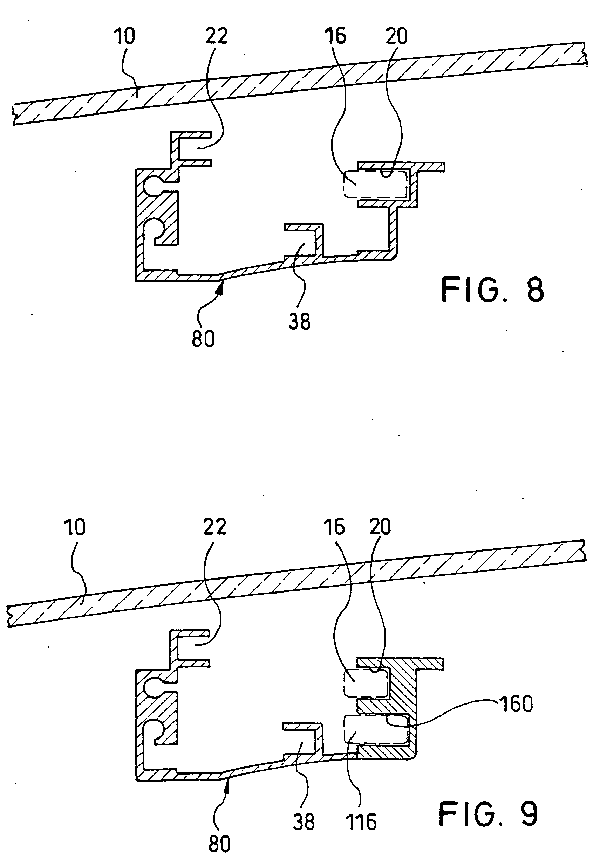

Die Führungskanäle 20, 22 und 38 sind gemäß Fig. 8 in einer gemeinsamen dachfesten Führungsschiene 80 ausgebildet, die im wesentlichen U-förmig ist, wobei die Führungskanäle 20 und 22 gegenüberliegend auf der Innenseite der beiden Seitenwangen ausgebildet sind, während der Führungskanal 38 für die Gleitschuhe 34 des Schlittens 36 im Bodenbereich der Führungsschiene ausgebildet ist. Die beiden Führungskanäle 20 und 22 verlaufen, abgesehen von ihren Anfangsbereichen 40 und 24, im wesentlichen horizontal. Der Führungskanal 38 verläuft über seine gesamte Länge im wesentlichen horizontal. Die Anfangsbereiche 40 und 24 sind bevorzugt als Einsätze in die Führungsschiene ausgebildet. Bei der in Fig. 1 gezeigten Schließstellung liegt der vordere Gleitschuh 16 im im wesentlichen horizontal verlaufenden Endbereich des Einsatzes 40. Insgesamt ist die Führungsbahn für den vorderen Gleitschuh 16 im Anfangsbereich S-förmig.

Das vordere Ende 42 des Deckels 10 liegt dichtend an der vorderen Dichtung 44 einer Dachöffnung 46 an.

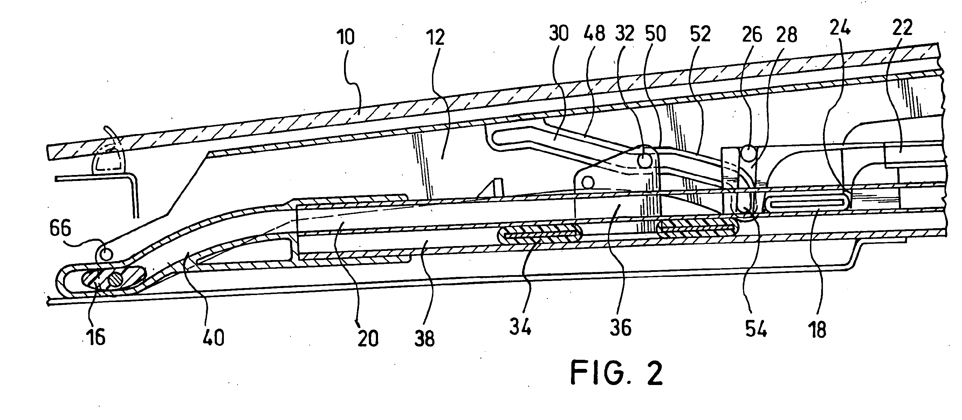

Durch Verschieben des Schlittens 36 nach hinten mittels des von einem in üblicher Weise ausgebildeten Antriebs angetriebenen Antriebskabels wird der vordere Deckel 10 in die in Fig. 2 gezeigte Zwischenstellung gebracht, in welcher die Hinterkante des Deckels durch die Verschiebung des Kulissenstiftes 32 in der Kulissenbahn 30 des Deckelträgers 12 bezüglich des vorderen Endes 42 ausgestellt ist. Der Kulissenstift 32 befindet sich bei der in Fig. 2 gezeigten Stellung nach Durchlaufen eines gleichmäßig abfallenden Abschnitts 48 in einem horizontalen Abschnitt 50, welcher dazu dient, Herstellungs- und Montagetoleranzen auszugleichen. Durch die dadurch verursachte Ausstellbewegung hat sich der Bolzen 26 in der dachfesten Kulissenbahn 28 nach oben zu deren offenem Ende hin bewegt. Da er jedoch immer noch in Eingriff mit der Kulissenbahn 28 steht, wird eine Verschiebung des Deckelträgers 12 nach hinten im wesentlichen verhindert, so dass das vordere Ende 42 des Deckels 10 immer noch dichtend an der vorderen Dichtung 44 anliegt, um eine übermäßige Windgeräuschentwicklung zu verhindern. Der hintere Gleitschuh 18 wurde ebenfalls entsprechend angehoben und ist nun in den sehr steil nach oben führenden Anfangsbereich 24 des Führungskanals 22 eingetreten. Der vordere Gleitschuh 16 befindet sich immer noch im horizontalen Anfangsbereich des Führungskanals 20.

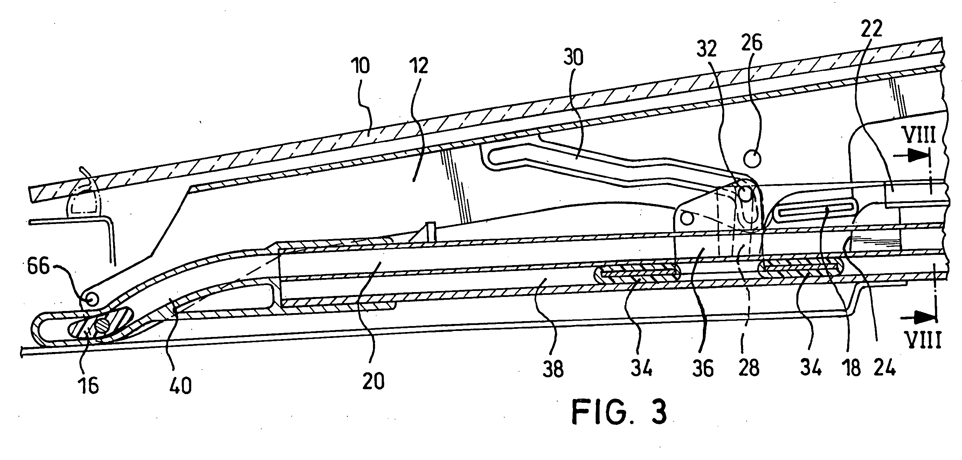

Bei der in Fig. 3 gezeigten Zwischenstellung hat der Kulissenstift 32 nach Durchlaufen eines gleichmäßig nach unten verlaufenden geneigten Abschnitts 52 des Kulissenschlitzes 30 den nahezu senkrecht nach unten führenden hinteren Endabschnitt 54 des Kulissenschlitzes 30 erreicht. Durch die durch das Durchlaufen des geneigten Abschnitts 52 weiter fortgesetzte Ausstellbewegung der Deckelhinterkante ist der Bolzen 26 aus der Kulissenbahn 28 an deren oberem Ende ausgetreten und hat seine Verriegelungsfunktion somit beendet. Beim Austritt aus der Kulissenbahn 28 wird dabei die Verriegelungsfunktion bezüglich einer vorzeitigen Verschiebungsbewegung des Deckels 10 an den sehr steil nach oben führenden Teil des Anfangsabschnitts des Führungskanals 22 übergeben.

Fig. 3 zeigt die Deckelstellung, in welcher die Ausstellfunktion der Kulissenbahn 30 an den Führungskanal 22 übergeben wird, d.h. die Formgebung des Anfangsbereichs 24 sorgt über den Eingriff des hinteren Gleitschuhs 18 für eine weitere Ausstellbewegung des Deckels 10. Der Eingriff des Kulissenstifts 32 in den nahezu senkrechten Endabschnitt 54 der Kulissenbahn 30 dient nun im wesentlichen der Mitnahme des Deckelträgers 12 nach hinten. Durch den sehr steilen Anstieg der Kulissenbahn 28 und des Anfangsbereichs 24 des Führungskanals 22 wird der vordere Gleitschuh 16 und die vordere Deckelkante 42 bei der Ausstellbewegung des Deckels 10 in Längsrichtung des Daches im wesentlichen ortsfest gehalten, so dass die Lage der Kulissenbahn 28 und des Anfangsbereichs 24 die Lage der Deckelvorderkante 42 bei der Ausstellbewegung bestimmen.

Bei der in Fig. 3 gezeigten Stellung ist der Deckel 10 bereits nahezu vollständig ausgestellt.

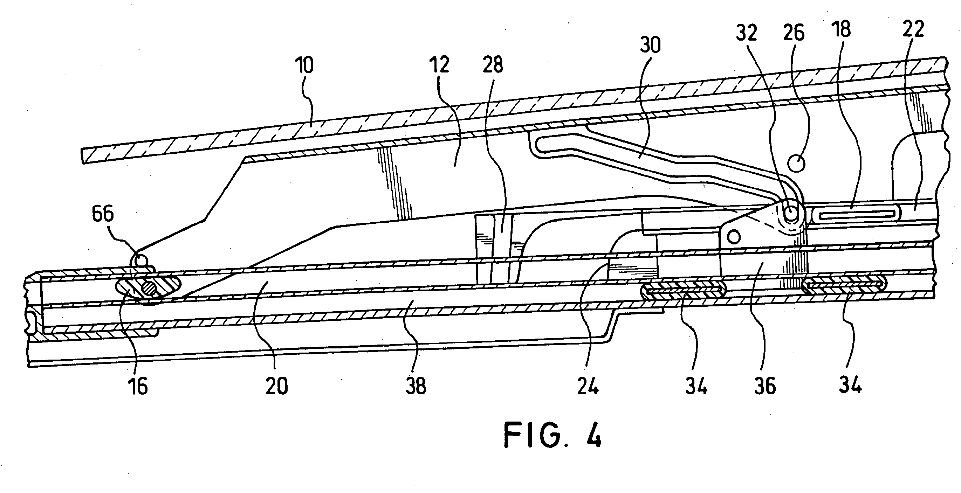

In Fig. 4 ist schließlich eine Stellung des vorderen Deckels 10 gezeigt, in welcher dieser vollständig ausgestellt und bereits ein Stück nach hinten verschoben ist. Der hintere Gleitschuh 18 befindet sich nun in dem horizontalen Abschnitt des Führungskanals 22 und der Kulissenstift 32 befindet sich nun am hinteren bzw. unteren Ende des nahezu senkrechten Abschnitts 54 der Kulissenbahn 30. Durch Letzteres wird eine Mitnahme des Deckelträgers 12 durch den Schlitten 36 nach hinten gewährleistet. Der Kraftschluss wirkt dabei auch in Schließrichtung. Der vordere Gleitschuh 16 hat nun den ansteigenden Bereich des Führungskanals 20 durchlaufen und befindet sich im angehobenen horizontalen Teil, so dass nun die Deckelvorderkante ebenfalls angehoben ist, jedoch in wesentlich geringerem Maß als die Deckelhinterkante. Durch weiteres Verschieben des Schlittens 36 nach hinten kann der Deckel 10 in seine vollständig geöffnete Stellung gebracht werden. Bei Schließen des Deckels 10 laufen die geschilderten Vorgänge in umgekehrter Reihenfolge ab.

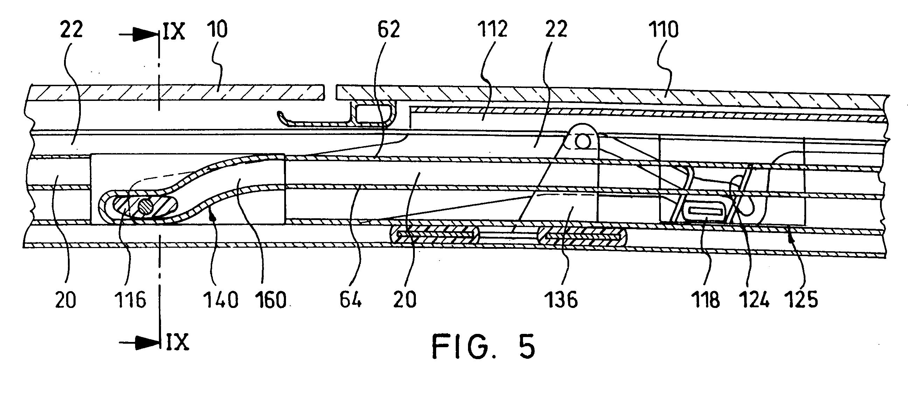

Fig. 5 zeigt den hinteren Deckel 110 eines Doppelspoilerdaches, welcher in Schließstellung flächig hinter einem vorderen Deckel 10 liegt, um die Dachöffnung 46 gemeinsam abzudecken. Der vordere Deckel 10 entspricht dabei funktional dem in Fign. 1 bis 4 gezeigten Deckel, außer dass der hintere Gleitschuh 18, statt wie in Fig. 1 bis 4 hinter dem hinteren Ende der Kulissenbahn 30, vor dem hinteren Ende der Kulissenbahn 30 angeordnet ist. Der hintere Deckel 110 ist im wesentlichen analog zu dem vorderen Deckel 10 aufgebaut. Gleiche oder ähnliche Teile sind mit einer um 100 erhöhten Bezugszahl versehen. Ein Unterschied besteht jedoch darin, dass der hintere Gleitschuh 118 des hinteren Deckels 110 kürzer als der hintere Gleitschuh 18 des vorderen Deckels 10 ausgebildet ist, wobei der steile Anfangsbereich 124 der Führungsbahn 22 hier schmaler ausgebildet ist als der Anfangsbereich 24 der Führungsbahn 22 für den hinteren Gleitschuh 18 des vorderen Deckels 10. Der Führungskanal 22 wird sowohl von dem hinteren Gleiter 18 des vorderen Deckels 10 als auch dem hinteren Gleiter 118 des hinteren Deckels 110 genutzt. Bei vollständig zurückgeschobenen Deckeln 10, 110 kann dabei der Gleiter 18 des vorderen Deckels 10 in den Bereich der Führungsbahn 22 hinter den Anfangsbereich 124 gelangen. Um dabei ein unerwünschtes Eintreten des Gleitschuhs 18 des vorderen Deckels 10 in den steilen Anfangsbereich 124 für den Gleitschuh 118 zu verhindern, ist der Gleitschuh 18, wie oben erwähnt, wesentlich länger als der Gleitschuh 118 des hinteren Deckels 110. Der Bereich, in welchen der steile Anfangsbereich 124 von dem Führungskanal 22 abzweigt, ist als Einsatzteil 125 ausgebildet.

Auch die Führungsbahn 20 wird sowohl von dem vorderen Gleitschuh 16 des vorderen Deckels 10 als auch dem vorderen Gleitschuh 116 des hinteren Deckels 110 genutzt. Auch hier ist deshalb ein Verzweigungsbereich 140 vorgesehen, der als Einsatzteil ausgebildet ist. In dem Verzweigungsbereich 140 wird aus der gemeinsam genutzten Hauptbahn 20 eine Nebenbahn 160 nach unten abgezweigt, welche den Anfangsbereich der Führungsbahn für den vorderen Gleitschuh 116 des hinteren Deckels 110 bildet. Die Weichenfunktion des Verzweigungsbereichs 140 kann dabei entweder wie im Fall der hinteren Gleitschuhe 18, 118 durch eine unterschiedliche Längenausdehnung der beiden Gleitschuhe 16, 116 oder durch Vorsehen eines zusätzlichen Gleitelements nahe des vorderen Gleitschuhs 16 des vorderen Deckels 10 in der nachfolgend geschilderten Weise erfolgen.

Bei dem Gleitschuh 16 des vorderen Deckelträgers 12 ist ein zusätzliches Gleitelement 66 vorgesehen, welches so angeordnet und ausgebildet ist, dass es im Verzweigungsbereich 140 an der Außenseite der oberen Seitenwand 62 anliegt und dabei derart mit dem Gleitschuh 16 zusammenwirkt, um den Gleitschuh 16 entlang der Innenseite der oberen Seitenwand 62 in der Hauptbahn 20 zu führen und dadurch im Verzweigungsbereich 140 ein Eintreten des Gleitschuhs 16 in die Nebenbahn 160 zu verhindern. Dies wird im gezeigten Beispiels dadurch erreicht, dass die Wandstärke der oberen Seitenwand 62 im Bereich des Verzweigungseinsatzes 140 vergrößert ist (nicht dargestellt), so dass in diesem Bereich das obere Gleitelement 66 an der Außenseite der oberen Seitenwand 62 obere Gleitelement 66 an der Außenseite der oberen Seitenwand 62 anliegt, während der Gleitschuh 16 an der Innenseite der oberen Seitenwand 62 anliegt. Außerhalb des Verzweigungseinsatzes 140 ist die Wandstärke der oberen Seitenwand 62 so verringert, dass das obere Gleitelement 66 nicht mehr an der Außenseite der oberen Seitenwand 62 anliegt und dadurch eine Überbestimmung der Führung verhindert wird, da in diesem Bereich die Innenseite der unteren Seitenwand 64 für eine entsprechende Führung in Hochrichtung sorgen soll, d.h. außerhalb des Verzweigungseinsatzes 140 soll der Gleitschuh 16 in üblicher Weise von den beiden Seitenwänden 62 und 64 des Führungskanals 20 in Hochrichtung geführt werden. Durch die geschilderte Wirkung des oberen Gleitelements 66 im Bereich des Verzweigungsbereichs 140 wird somit verhindert, dass der Gleitschuh 16, wenn er die Abzweigung der Nebenbahn 160 nach unten passiert, nach unten fällt und in die Nebenbahn 160 eintritt.

Eine Führung des vorderen Gleitschuhs 116 des hinteren Deckels 110 bei Passieren der Verzweigungsstelle wird in Hochrichtung dadurch erreicht, dass sich die Tiefe, d.h. die Ausdehnung in Dachquerrichtung, der Hauptbahn 20 bezüglich der Tiefe der Nebenbahn 160 verringert, wie dies in Fig. 9 zu sehen ist (die Gleitschuhe 16 und 116 sind in Fig. 8 bzw. 9 gestrichelt dargestellt). Die Breite (d.h. die Ausdehnung in Dachquerrichtung) des Gleitschuhs 16 des vorderen Deckels 10 ist entsprechend der Tiefe der Hauptbahn 20 im Verzweigungseinsatz 140 gewählt, während die Breite des Gleitschuhs 116 des hinteren Deckels 110 entsprechend der Tiefe der Nebenbahn 160, d.h. entsprechend größer, gewählt ist. Diese unterschiedlichen Breiten der Gleitschuhe 16 bzw. 116 haben zur Folge, dass der Gleitschuh 16 des vorderen Deckels 10 den Verzweigungsbereich 140 durch die Wirkung des oberen Gleitelements 66 auf der Hauptbahn 20 passieren kann, während der Gleitschuh 116 des hinteren Deckels 110 durch seine größere Breite in die Nebenbahn 160 eintritt und in dieser nach unten geführt wird. Im hinteren Teil der Hauptbahn 20 entspricht deren Tiefe der Tiefe der Nebenbahn 160, so dass dieser Teil von beiden Gleitschuhen 16, 116 gemeinsam genutzt werden kann.

Die beiden Gleitschuhe 16, 116 haben im wesentlichen gleiche Länge (d.h. Abmessung in Dachlängsrichtung), wodurch auch für den Gleitschuh 16 des vorderen Deckels 10 enge Krümmungsradien im vorderen Endbereich des vorderen Teils 40 der Hauptbahn 20 möglich sind (dieser vordere Endbereich kann somit in ähnlicher Formgebung wie die Nebenbahn 160 für den Gleitschuh 116 des hinteren Deckels 110 ausgebildet sein).

Ein weiterer wesentlicher Unterschied zum vorderen Deckel 10 besteht darin, dass bei dem hinteren Deckel 110 kein Verriegelungsbolzen analog zum Bolzen 26 vorgesehen ist, um zu Beginn der Ausstellbewegung eine Verschiebung des Deckels zu verhindern, da der hintere Deckel 110 eine geringere Ausstellhöhe aufweist. Auch die Kulissenbahn 132 ist leicht abweichend ausgebildet, indem der zweite gleichmäßig abfallende Bereich 52 im wesentlichen entfällt.

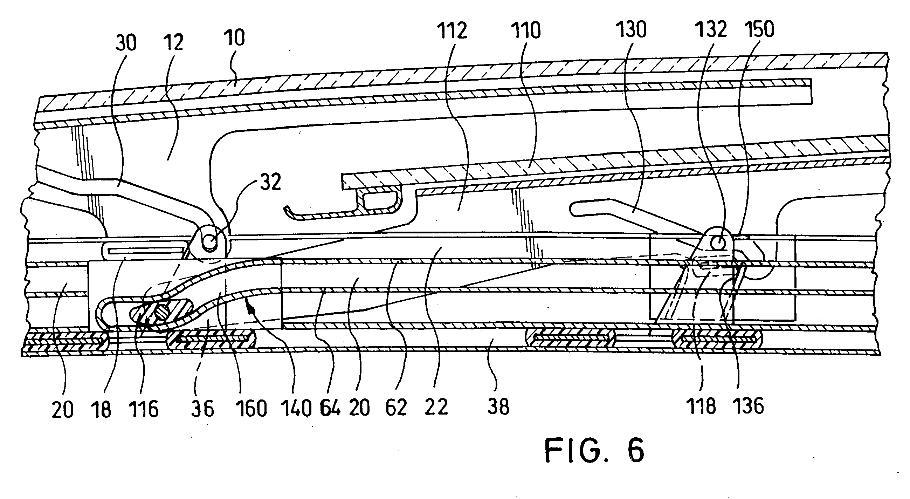

Bei der in Fig. 6 gezeigten Stellung ist der vordere Deckel 10 bereits vollständig ausgestellt und ein Stück weit nach hinten verschoben, während der hintere Deckel 110 noch nicht vollständig ausgestellt ist, d.h. es hat noch keine wesentliche Verschiebebewegung stattgefunden und der hintere Gleitschuh 118 befindet sich noch in dem steilen Anfangsabschnitt 124. Der Kulissenstift 132 befindet sich in einem im wesentlich horizontal verlaufenden Abschnitt 150 der Kulissenbahn 130.

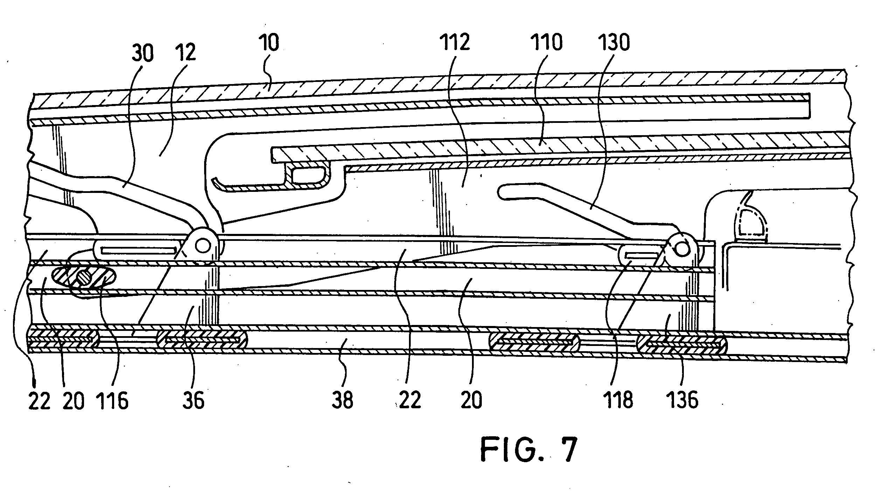

Bei der in Fig. 7 gezeigten Stellung schließlich sind beide Deckel 10, 110 vollständig nach hinten verschoben.

Auch bei dem hinteren Deckel ist das hintere Ende der Kulissenbahn 130 hinter dem hinteren Gleitschuh 118 angeordnet, siehe Fign. 5 bis 7.

Ein weiterer wesentlicher Unterschied zwischen dem vorderen Deckel 10 und dem hinteren Deckel 110 besteht darin, dass der Schlitten 136 des hinteren Deckels 110 nicht von einem Antriebskabel angetrieben wird. Statt dessen erfolgt die Verschiebung des Schlittens 136 durch Ankoppeln des Schlittens 36 des vorderen Deckels. Ausgehend von der Schließstellung beider Deckel 10, 110 sind die beiden Schlitten 36, 136 entkoppelt und es wird nur der Schlitten 36 des vorderen Deckels 10 nach hinten verschoben, wodurch in der beschriebenen Weise zunächst eine Ausstellbewegung des vorderen Deckels 10 und anschließend eine Verschiebung nach hinten erfolgt. Der hintere Deckel 110 verbleibt dabei zunächst in seiner Schließstellung. Erst wenn der vordere Deckel 10 mit seiner Hinterkante ein Stück weit über den noch geschlossenen hinteren Deckel 110 geschoben wurde, erfolgt eine Ankopplung des vorderen Schlittens 36 an den hinteren Schlitten 136, worauf die beiden Schlitten dann für den Rest der Öffnungsbewegung gemeinsam von dem Antriebskabel nach hinten geschoben werden. Nach dem Ankoppeln erfolgt dabei zunächst in der geschilderten Weise ein Ausstellen des hinteren Deckels 110, wobei der vordere Deckel 10 weiter nach hinten geschoben wird. Sobald der hintere Gleitschuh 118 des hinteren Deckels 110 den steilen Anfangsbereich 124 verlässt, beginnt nun auch für den hinteren Deckel 110 eine Verschiebebewegung nach hinten, die gemeinsam mit dem vorderen Deckel 10 erfolgt. In der in Fig. 7 gezeigten Stellung sind schließlich beide Deckel voll ausgestellt und maximal nach hinten verschoben. Das Schließen der Deckel 10, 110 erfolgt in umgekehrter Reihenfolge, wobei die Kopplung zwischen den beiden Schlitten 36, 136 selbsttätig gelöst wird, sobald der hintere Deckel 110 seine Schließstellung wieder erreicht hat. Der Koppelmechanismus kann in an sich bekannter Weise, beispielsweise durch einen Riegelstein-Mechanismus, ausgeführt sein.

### Bezugszeichenliste

- 10: (vorderer) Deckel
- 12: Deckelträger
- 14: Achse
- 16: (vorderer) Gleitschuh
- 18: (hinterer) Gleitschuh
- 20: Führungskanal (für 16)
- 22: Führungskanal (für 18)
- 24: Anfangsbereich (von 22)
- 26: Bolzen (an 12)
- 28: Kulissenbahn (für 26)
- 30: Kulissenbahn
- 32: Kulissenstift (an 36)
- 34: Gleitschuhe (von 36)
- 36: Schlitten
- 38: Führungskanal (für 36)
- 40: Anfangsbereich (von 20)
- 42: vorderes Ende (von 10)
- 44: (vordere) Dichtung
- 46: Dachöffnung
- 48: (abfallender) Abschnitt (von 30)
- 50: (horizontaler) Abschnitt (von 30)
- 52: (geneigter) Abschnitt (von 30)
- 54: Endabschnitt (von 30)
- 62: obere Seitenwand
- 64: untere Seitenwand
- 66: Gleitelement
- 80: Führungsschiene

## Patentansprüche

1. Öffnungsfähiges Fahrzeugdach, mit mindestens einem in der Schließstellung mindestens einen Teil einer Dachöffnung (46) verschließenden Deckel (10, 110), einem mittels eines Antriebs in einer ersten dachfesten Führung (38) in Dachlängsrichtung verschiebbaren Schlitten (36, 136) sowie einem deckelfesten Deckelträger (12, 112), der mittels eines ersten Gleitelements (16, 116) in einer zweiten dachfesten Führung (20) und mittels eines gegenüber dem ersten Gleitelement nach hinten versetzten zweiten Gleitelement (18, 118) in einer dritten dachfesten Führung (22) in Dachlängsrichtung verschiebbar geführt ist, wobei der Deckel durch Verschieben des Schlittens nach hinten mit seiner Hinterkante ausgestellt und mit ausgestellter Deckelhinterkante nach hinten verschoben werden kann, um die Dachöffnung freizugeben, **dadurch gekennzeichnet, dass** der Deckelträger (12, 112) mit einer ersten Kulissenbahn (30, 130) versehen ist, in welche der Schlitten (36, 136) mittels eines ersten Eingriffselements (32, 132) eingreift und die so ausgebildet ist, dass, ausgehend von der Schließstellung, eine Verschiebung des Schlittens und damit des ersten Eingriffselements nach hinten eine Ausstellbewegung der Deckelhinterkante bewirkt.

2. Fahrzeugdach nach Anspruch 1, **dadurch gekennzeichnet, dass** die Höhenführung der Hinterkante des Deckels (10, 110) zu Beginn der Öffnungsbewegung mittels der ersten Kulissenbahn (30, 130) und danach mittels der dritten dachfesten Führung (22) erfolgt.

3. Fahrzeugdach nach Anspruch 2, **dadurch gekennzeichnet, dass** die dritte dachfeste Führung (22) so ausgebildet ist, dass sie nach Übernahme der Höhenführung von der ersten Kulissenbahn (30, 130) den Deckel (10, 110) noch weiter ausstellt.

4. Fahrzeugdach nach einem der vorhergehenden Ansprüche, **dadurch gekennzeichnet, dass** die erste Kulissenbahn (30, 130) in ihrem hinteren Endbereich (54) im wesentlichen vertikal verläuft.

5. Fahrzeugdach nach Anspruch 4, **dadurch gekennzeichnet, dass** der Deckel (10, 110) in ausgestelltem Zustand durch Anlage des ersten Eingriffselements (32, 132) am vertikalen Abschnitt des hinteren Endes (54) der ersten Kulissenbahn (30, 130) in Dachlängsrichtung verschoben wird.

6. Fahrzeugdach nach einem der vorhergehenden Ansprüche, **dadurch gekennzeichnet, dass** das zweite Gleitelement (18) in der Schließstellung außer Eingriff mit der dritten dachfesten Führung (22) steht und mittels der von der Bewegung des ersten Eingriffselement (32) in der ersten Kulissenbahn (30) bewirkten Ausstellbewegung des Deckels (10) in Eingriff mit der dritten dachfesten Führung gebracht wird.

7. Fahrzeugdach nach einem der vorhergehenden Ansprüche, **dadurch gekennzeichnet, dass** an dem Deckelträger (12) ein zweites Eingriffselement (26) vorgesehen ist, welches zu Beginn der von dem Eingriff des ersten Eingriffselements (32) in die erste Kulissenbahn (30) bewirkten Ausstellbewegung des Deckels (10) mit einer im wesentlichen vertikal verlaufenden dachfesten zweiten Kulissenbahn (28) in Eingriff steht, um eine Verschiebung des Deckels in Dachlängsrichtung im wesentlichen zu verhindern.

8. Fahrzeugdach nach Anspruch 1 bis 6, **dadurch gekennzeichnet, dass** die dritte dachfeste Führung (22, 124) so ausgebildet ist, dass durch den Eingriff des zweiten Gleitelements (118) in die dritte dachfeste Führung eine Verschiebung des Deckels (110) in Dachlängsrichtung verhindert wird, bis die von dem Eingriff des ersten Eingriffselements (132) in die erste Kulissenbahn (130) bewirkte Ausstellbewegung des Deckels im wesentlichen beendet ist.

9. Fahrzeugdach nach einem der vorhergehenden Ansprüche, **dadurch gekennzeichnet, dass** die dritte dachfeste Führung (22) in ihren vorderen Endbereich (24, 124) im wesentlichen vertikal verläuft.

10. Fahrzeugdach nach Anspruch 9, **dadurch gekennzeichnet, dass** die dritte dachfeste Führung (22), abgesehen von ihrem vorderen Endbereich (24, 124), im wesentlichen horizontal verläuft.

11. Fahrzeugdach nach einem der vorhergehenden Ansprüche, **dadurch gekennzeichnet, dass** die zweite dachfeste Führung (20) im vorderen Endbereich (40, 140) im wesentlichen S-förmig ausgebildet ist, um die Deckelvorderkante (42) bei der Öffnungsbewegung anzuheben, und danach im wesentlichen horizontal verläuft.

12. Fahrzeugdach nach Anspruch 11, **dadurch gekennzeichnet, dass** das Anheben der Deckelvorderkante (42) erst kurz vor oder nach dem Ende der Ausstellbewegung des Deckels (10, 110) erfolgt.

13. Fahrzeugdach nach einem der vorhergehenden Ansprüche, **dadurch gekennzeichnet, dass** die erste (38) , zweite (20) und dritte dachfeste Führung (22) Teil einer Führungsschiene sind, wobei die zweite und die dritte dachfeste Führung auf gegenüberliegenden Seiten der Führungsschiene angeordnet sind.

14. Fahrzeugdach nach Anspruch 13, **dadurch gekennzeichnet, dass** die erste dachfeste Führung (38) unterhalb der dritten dachfesten Führung (22) angeordnet ist.

15. Fahrzeugdach nach einem der vorhergehenden Ansprüche, **dadurch gekennzeichnet, dass** das zweite Gleitelement (18, 118) fest an dem Deckelträger (12, 112) angebracht ist und in Dachlängsrichtung langgestreckt ausgebildet ist.

16. Fahrzeugdach nach einem der vorhergehenden Ansprüche, **dadurch gekennzeichnet, dass** zwei in der Schließstellung hintereinander liegende Deckel (10, 110) mit ähnlicher Funktionalität vorgesehen sind, die gemeinsam die Dachöffnung (46) abdecken.

17. Fahrzeugdach nach Anspruch 16, **dadurch gekennzeichnet, dass** nur der Schlitten (36) des vorderen Deckels (10) direkt von dem Antrieb angetrieben ist, wobei der Schlitten des vorderen Deckels mit dem Schlitten (136) des hinteren Deckels (110) für die Öffnungs- und Schließbewegung des hinteren Deckels selbsttätig koppelbar ist.

18. Fahrzeugdach nach Anspruch 16 oder 17, **dadurch gekennzeichnet, dass** die zweite (20) und dritte dachfeste Führung (22) jeweils in einem Teil von beiden Deckeln (10, 110) gemeinsam genutzt werden, wobei ein ausschließlich von dem hinteren Deckel (110) genutzter Teil (124, 160) jeweils weichenartig von dem gemeinsam genutzten Bereich abzweigt.

19. Fahrzeugdach nach Anspruch 18, **dadurch gekennzeichnet, dass** das zweite Gleitelement (18) des vorderen Deckels (10) in Dachlängsrichtung länger ausgebildet ist als das zweite Gleitelement (118) des hinteren Deckels (110), um ein Eintreten des zweiten Gleitelements (18) des vorderen Deckels (10) in den dem zweite Gleitelement (118) des hinteren Deckels (110) zugeordneten vorderen Endbereich (160) der dritten dachfesten Führung (22) zu verhindern.

20. Fahrzeugdach nach Anspruch 18 oder 19, **dadurch gekennzeichnet, dass** die zweite dachfeste Führung (20) eine obere (62) und eine untere Begrenzungswand (64) aufweist, die im Zusammenspiel für die Höhenführung des ersten Gleitelements (16, 116) sorgen, wobei der ausschließlich von dem hinteren Deckel (110) genutzte Teil (160) nach unten abzweigt, wobei bei dem ersten Gleitelement (16) des vorderen Deckels (10) ein drittes Gleitelement (66) vorgesehen ist, und wobei im Abzweigungsbereich (140) des erste (16) und das dritte Gleitelement (66) derart zusammenwirken, dass das erste Gleitelement (16) entlang der Innenseite der oberen Begrenzungswand (62) geführt wird und nicht in den nach unten abzweigenden Teil eintreten kann.

21. Fahrzeugdach nach Anspruch 17, **dadurch gekennzeichnet, dass** bei der Öffnungsbewegung eine Krafteinleitung von dem Schlitten (36) des vorderen Deckels (10) in den Schlitten (136) des hinteren Deckels (110) erst erfolgt, wenn der vordere Deckel (10) bereits im wesentlichen vollständig ausgestellt und zurückgeschoben wurde.
